# EUROPÄISCHE PATENTSCHRIFT

(11) **EP 2 976 669 B1**
(45) Veröffentlichungstag und Bekanntmachung des Hinweises auf die Patenterteilung: **16.08.2023**
(21) Anmeldenummer: 14712270.9
(22) Anmeldetag: 20.03.2014
(51) Int. Cl.: G02B 21/00, G02B 21/36, G02B 21/16

(54) **VERFAHREN UND OPTISCHE ANORDNUNG ZUM MANIPULIEREN UND ABBILDEN EINER MIKROSKOPISCHEN PROBE**
METHOD AND OPTICAL ARRANGEMENT FOR MANIPULATING AND IMAGING A MICROSCOPIC SAMPLE
PROCÉDÉ ET DISPOSITIF OPTIQUE POUR MANIPULER ET REPRODUIRE UN ÉCHANTILLON MICROSCOPIQUE

(30) Priorität: 20.03.2013 DE 102013204959; 15.07.2013 DE 102013213781
(43) Veröffentlichungstag der Anmeldung: 27.01.2016
(73) Patentinhaber: Leica Microsystems CMS GmbH, 35578 Wetzlar (DE)
(72) Erfinder: KNEBEL, Werner, 76709 Kronau (DE); FOUQUET, Wernher, 68167 Mannheim (DE); SIECKMANN, Frank, 75301 Eppingen (DE)
(74) Vertreter: Schaumburg und Partner Patentanwälte mbB
(86) Internationale Anmeldenummer: PCT/EP2014/055661
(87) Internationale Veröffentlichungsnummer: WO 2014/147207

(56) Entgegenhaltungen:
- EP-A1- 1 617 255
- WO-A1-2005/031428
- WO-A1-2014/026683
- DE-A1- 19 632 040
- DE-A1- 19 834 279
- DE-A1-102008 018 476
- DE-U1-202011 110 077
- J. HUISKEN ET AL: "Selective plane illumination microscopy techniques in developmental biology", DEVELOPMENT, Bd. 136, Nr. 12, 22. Mai 2009 (2009-05-22) , Seiten 1963-1975, XP055006180, ISSN: 0950-1991, DOI: 10.1242/dev.022426
- CELLA ZANACCHI F ET AL: "Two-photon fluorescence excitation within a light sheet based microscopy architecture", MULTIPHOTON MICROSCOPY IN THE BIOMEDICAL SCIENCES XI, SPIE, 1000 20TH ST. BELLINGHAM WA 98225-6705 USA, Bd. 7903, Nr. 1, 10. Februar 2011 (2011-02-10), Seiten 1-5, XP060007684, DOI: 10.1117/12.879792

## Beschreibung

Die Erfindung betrifft ein Verfahren, bei dem eine Probe mit Manipulationslicht manipuliert wird und bei dem die Probe mittels SPIM-Technik unter Beleuchtung mit Beleuchtungslicht, insbesondere Anregungslicht zur Fluoreszenzanregung, in Form eines Beleuchtungslichtblatts abgebildet wird.

Die SPIM-Technik (Single Plane Illumination Microscopy), bei der eine schichtweise Beleuchtung der Probe erfolgt, erlaubt eine schnellere und probenschonendere Erfassung von Bilddaten, als beispielsweise bei einer punktweisen Abtastung einer Probe. Ein bekanntes Einsatzgebiet der SPIM-Technologie ist der Bereich der Fluoreszenz-Mikroskopie, wobei Fluorophore in der Probe mit Laserlicht angeregt werden. Bei der SPIM-Technologie findet hierbei eine Anregung nur in einem Beleuchtungslichtblatt (auch "Lichtstreifen" genannt) statt. Eine Schädigung der Probe durch Beleuchtungslicht in anderen Ebenen ist hierdurch vermieden.

Eine nach dem SPIM-Verfahren arbeitende optische Vorrichtung ist in DE 102 57 423 A1 beschrieben. Bei diesem Mikroskop wird eine Probe mit einem dünnen Lichtstreifen beleuchtet, während die Beobachtung senkrecht zu der Ebene des beleuchtenden Lichtstreifens erfolgt. Hierbei erfolgen die Beleuchtung und die Detektion über zwei separate optische Strahlengänge mit jeweils separater Optik, insbesondere mit zwei separaten, zueinander senkrechten Objektiven. Der Lichtstreifen wird von einem Beleuchtungsobjektiv und einer ihm vorgeschalteten Zylinderoptik erzeugt. Für die Bildaufnahme wird die Probe durch den bezüglich des Detektors feststehenden Lichtstreifen bewegt, um schichtweise Fluoreszenz- und/oder Streulicht mit einem flächigen Detektor aufzunehmen. Die so gewonnenen Schichtbilddaten lassen sich anschließend zu einem aus einer dreidimensionalen Abbildung der Probe entsprechenden Datensatz zusammensetzen. Eine Manipulation einer Probe offenbart diese Druckschrift nicht.

Aus DE 20 2011 110 077 U1 ist eine Anordnung zum Beleuchten einer Probe bei der SPIM-Mikroskopie bekannt. Die Anordnung weist eine Lichtquelle zum Erzeugen eines Lichtbündels, Mittel zum Erzeugen eines Lichtstreifens aus dem Lichtbündel, und wenigstens ein Objektiv, das eine Optik aufweist, die dazu ausgebildet und bestimmt ist, von der Probe ausgehendes Detektionslicht direkt oder indirekt einem Detektor zuzuführen, auf. Außerdem weist die Anordnung eine der Optik des Objektivs nachgeschaltete Umlenkeinrichtung zum Umlenken des Lichtstreifens auf.

Grundsätzlich ist die Kombination von der SPIM-Technologie und einer optischen Probenmanipulation sehr attraktiv, da sich die sehr schnelle und probenschonende SPIM-Technologie sehr gut eignet, die Auswirkungen von Manipulationen, insbesondere von verhältnismäßig großen, lebenden Organismen, zu beobachten.

Aus DE 10 2007 047 464 A1 ist bekannt, eine zusätzliche Manipulationslichtquelle bereit zu stellen, deren Manipulationslicht über eine Linsen- und Spiegelanordnung in den Beleuchtungsstrahlengang über ein Beleuchtungsobjektiv eingekoppelt wird. Alternativ wird in derselben Druckschrift vorgschlagen, mittels dichroitischer Spiegel zusätzlich Manipulationslicht in den Detektionsstrahlengang einzukoppeln und durch das Detektionsobjektiv auf die Probe zu richten.

Bei einer solchen Ausführung, bei der das Manipulationslicht sowohl über den Beleuchtungsstrahlengang als auch über den Detektionsstrahlengang der Probe zugeführt wird, müssen in aufwendiger Weise drei Strahlteiler und zwei Blenden in den Strahlengang eingefügt werden. Vorteilhaft an diesem Aufbau ist, dass die Manipulation aus zwei Richtungen stattfinden kann. Anderseits führt dies zu einem komplexen optischen Aufbau und Lichtverlusten, zumindest auf der Beleuchtungsseite.

Aus der wissenschaftlichen Veröffentlichung "Selective plane illumination microscopy techniques in developmental biology", Huisken et al., Development 136, 1963-1975 (2009), ist eine solche Vorrichtung bekannt, bei der zusätzlich ein Photomanipulationslaser vorgesehen ist, dessen Licht über das Detektionsobjektiv auf die Probe fokussiert wird. Eine weitgehend ähnliche Anordnung ist aus "Three-dimensional laser microsurgery in light-sheet based microscopy (SPIM)", Engelbrecht et al., Optica Express 6420, Vol. 15, No. 10 (2007), bekannt. Auch in dem Artikel von Yanik et al., "Technologies for Micromanipulating, Imaging, and Phenotyping Small Invertebrates and Vertebrates", Annu. Rev. Biomed. Eng. 2011; 13: 185-217, ist eine ähnliche Vorrichtung und ein Verfahren bekannt, bei dem die Proben durch eine Kapillare gepumpt werden.

Aus der Druckschrift DE 20 2011 110077 U1 ist eine optische Anordnung bekannt, bei der Beleuchtungslicht in Form eines Beleuchtungslichtblatts in ein Objektiv eingestrahlt wird und nach Durchtritt durch das Objektiv abwechselnd an zwei Umlenkspiegeln in eine Probe umgelenkt wird.

Die Druckschrift WO 2014/026683 A1 offenbart ein Mikroskop, bei dem ein Beleuchtungslichtstrahl zunächst einer Teilungseinrichtung zugeführt wird, die den Beleuchtungslichtstrahl in zwei Teilbündel aufteilt. Diese beiden Teilbündel passieren dann ein Objektiv und fallen jeweils auf einen Umlenkspiegel, wodurch zwei koplanare Lichtblätter von entgegengesetzten Seiten in die Probe eingestrahlt werden.

Aus der Druckschrift WO 2005/031428 A1 ist ein Mikroskop mit evaneszenter Probenbeleuchtung bekannt, die eine Vorrichtung zur optischen Manipulation der Probe aufweist. Diese Vorrichtung umfasst eine Lichtquelle, die ein Manipulationslichtstrahlenbündel emittiert, und eine einstellbare Strahlablenkeinrichtung. Als Strahlablenkeinrichtung dient ein Galvanometerspiegel, ein drehbares oder kippbares Prisma, ein Kippspiegel, ein Mikrospiegel oder ein akustooptisches Bauteil.

Es ist daher die Aufgabe der vorliegenden Erfindung, ein Verfahren anzugeben, das eine besonders vielseitige und flexible Probenmanipulation und Probenabbildung ermöglicht.

Diese Aufgabe wird durch ein Verfahren gemäß Anspruch 1 gelöst. Durch die Erfindung ist es ermöglicht, eine Probe ganz flexibel und individuell auf den jeweiligen Anwendungsfall einstellbar manipulieren und beobachten zu können. Insbesondere ist es ermöglicht, die Probe aus unterschiedlichen Richtungen mit Manipulationslicht zu beaufschlagen. Beispielsweise ist auch eine isozentrische und, falls gewünscht, sich periodisch wiederholende Beaufschlagung ein und desselben, interessierenden Probenbereichs mit Manipulationslicht aus ganz unterschiedlichen Richtungen ermöglicht, was weiter unten detailliert erläutert ist. Insbesondere ist es durch die Erfindung auch ermöglicht, eine kohärente, simultane Beleuchtung eines interessierenden Probenbereichs vorzunehmen.

Es ist insbesondere vorteilhaft auch möglich, einen interessierenden Probenbereich analog wie bei einer stereotaktischen Bestrahlung, wie sie in der Strahlentherapie beispielsweise zur Tumorbehandlung eingesetzt wird, mit Manipualtionslicht zu beaufschlagen. Der Probenbereich kann beispielsweise durch Verschieben der Probe mit Hilfe eines geeigneten, vorzugeweise in allen drei Raumrichtungen, einstellbaren Verschiebetisches, auf dem die Probe gelagert ist, positioniert werden. Insbesondere kann der Verschiebtisch motorisch einstellbar ausgebildet sein.

Die Erfindung hat den weiteren, ganz besonderen Vorteil, dass das Beleuchtungslicht und das Manipulationslicht aus unterschiedlichen Richtungen auf die Probe treffen können, wobei, beispielsweise durch Verschieben der Umlenkeinrichtung relativ zum Objektiv, und/oder durch Verwendung einer einstellbaren Strahlablenkvorrichtung für das Manipulationslicht, und/oder für das Beleuchtungslicht hinsichtlich der möglichen Einfallsrichtungen und Einfallswinkel auf die Probe nahezu keine Grenzen gesetzt sind. Insbesondere ist der Benutzer nicht darauf beschränkt, die Probe ausschließlich entlang der optischen Achse des Objektivs oder senkrecht zur optischen Achse des Objektivs mit Beleuchtungslicht und/oder Manipulationslicht zu beaufschlagen.

Die Erfindung hat, insbesondere auch vor diesem Hintergrund, den ganz besonderen Vorteil, dass auf ein aufwändiges Umschalten zwischen langen Teilstrahlengängen und auf eine große Anzahl von dichroitischen Spiegeln zum Ein- oder Auskoppeln des Manipulationslichtes weitgehend verzichtet werden kann, obwohl sogar die Vielseitigkeit bei der erfindungsgemäßen Anordnung größer ist, als bei den aus dem Stand der Technik bekannten Anordnungen. Dabei sind die zwangsläufig bei Verwendung einer Vielzahl langer, unterschiedlicher Strahlengänge auftretenden Instabilitäten und Zusatzkosten vermieden.

Insoweit ist es vorteilhaft sogar möglich, ein Scanmikroskop, insbesondere ein konfokales Scanmikroskop, nachträglich ohne großen technischen Aufwand umzurüsten, um eine erfindungsgemäße optische Anordnung herzustellen und/oder um das erfindungsgemäße Verfahren auszuführen.

Mittels einer optischen Probenmanipulation können beispielsweise sehr genaue mikroskopische, kaum invasive Manipulationen durchgeführt werden. Vorzugsweise sind die Eigenschaften des Manipulationslichtes, beispielsweise hinsichtlich Wellenlänge und/oder Lichtleistung und/oder Intensität und/oder hinsichtlich der geometrischen Form eines oder mehrerer Manipulationslichtbündel, an die jeweilige Anwendung angepasst. Beispielsweise kann das Manipulationslicht gepulst sein. Es ist auch möglich, ungepulstes Manipulationslicht zu verwenden.

Insoweit beinhaltet die erfindungsgemäße Anordnung vorzugweise eine für die jeweilige Anwendung geeignete oder auf die jeweilige Anwendung anpassbare, insbesondere hinsichtlich der oben genannten Eigenschaften einstellbare, Lichtquelle, insbesondere Laserlichtquelle. Bei der erfindungsgemäßen optischen Anordnung kann beispielsweise ein und dieselbe Beleuchtungseinrichtung sowohl für die Erzeugung des Manipulationslichtes, als auch des Beleuchtungslichtes verwendet werden. Es ist jedoch auch möglich, dass zur Erzeugung des Manipulationslichtes und des Beleuchtungslichtes unterschiedliche Lichtquellen vorhanden sind.

Ultraviolettes Licht (UV-Licht) ist ein sehr energiereiches Licht, das beispielsweise für die Zellablation, das DNA-Schneiden und die Mikrosektion verwendet werden kann. Übliche Wellenlängen von 405nm können aber auch für eine Fotoaktivierung und Fotokonversion verwendet werden. Sichtbares Licht (VIS) kann für Bleichexperimente von fluoreszierenden Farbstoffen (FRAP - Fluorescence Recovery After Photobleaching) verwendet werden. Sichtbares Licht kann jedoch ebenfalls für die Fotoaktivierung und Fotokonversion verwendet werden. Mit infrarotem Licht (IR-Licht), können ganz gezielt, sehr schonend und lokal begrenzt Schäden zugefügt werden, indem durch eine Beaufschlagung mit infrarotem Licht innerhalb eines sehr kleinen Volumens die Temperatur, beispielsweise eine Wassertemperatur, schlagartig erhöht wird. Eine direkte Absorption durch das Gewebe ist ebenfalls möglich. IR-Licht kann auch in Verbindung mit optischen Pinzetten verwendet werden. Außerdem kann infrarotes Manipulationslicht für die oben bereits beschriebenen Prozesse, wie Zellablation, Photobleaching, die Fotoaktivierung und Fotokonversion, verwendet werden, indem die biologischen Strukturen über das Prinzip der Multiphotonenanregung (MP) mit dem infraroten Manipulationslicht interagieren.

In vorteilhafter Weise ist es erfindungsgemäß insbesondere ermöglicht, anders als bei den aus dem Stand der Technik bekannten Vorrichtungen, bei Bedarf eine Probe auch aus deutlich mehr als nur zwei Richtungen zu manipulieren. Durch den Einsatz einer einstellbaren Strahlablenk-vorrichtung (beispielsweise zwei in Reihe geschaltete Galvanometerspiegel, von denen einer in x-Richtung und einer in y-Richtung ablenkt) können Manipulationen beispielsweise durch punktförmige, linienförmige und frei wählbare flächenförmige Manipulations-Beleuchtung erfolgen. Insebsondere ist es möglich, beliebig geformte Probenbereiche (ROI, Region of Interest) gezielt durch Beaufschlagung mit Manipulationslicht zu manipulieren.

Die Umlenkeinrichtung kann beispielsweise einen oder mehrere Spiegel aufweisen. Insbesondere kann der Spiegel eben ausgebildet sein. Es ist jedoch auch möglich, dass der Spiegel gekrümmt ausgebildet ist, beispielsweise, wenn das Beleuchtungslicht und/oder das Manipulationslicht kontinuierlich entlang der Spiegeloberfläche bewegt werden soll und/oder wenn eine zusätzliche Fokussierung erreicht werden soll. Es ist, alternativ oder zusätzlich, auch möglich, dass die Umlenkeinrichtung wenigstens ein Prisma oder wenigstens einen dichroitischen Strahlteiler aufweist.

Bei einer möglichen Ausführungsform ist vorgesehen, dass sowohl das Manipulationslicht, als auch das Beleuchtungslicht durch dasselbe Objektiv, das in einer Objektivarbeitsposition angeordnet ist, auf die Probe fokussiert wird. Eine solche Ausführung erlaubt es insbesonders, die Probe gleichzeitig mit dem Manipulationslicht und dem Beleuchtungslicht zu beaufschlagen, und schnell auf eine Manipulation erfolgende Reaktionen der Probe zu beobachten.

Eine solche Ausführung hat den besonderen Vorteil, dass sowohl auf das Beleuchtungslicht als auch auf das Manipulationslicht dieselbe numerische Apertur der Objektivs wirkt, und dass so, falls gewünscht, das Manipualtionslicht dieselbe Divergenz aufweisen kann, wie das Beleuchtungslicht.

Es ist bei Verwendung desselben Objektivs für das Manipulationslicht und für das Beleuchtungslicht jedoch auch möglich, dass die Probe zeitlich getrennt mit dem Manipulationslicht und dem Beleuchtungslicht beaufschlagt wird.

Insbesondere ist es bei einer zeitlich getrennten Beaufschlagung möglich, das Manipulationslicht nach dem Durchlaufen des Objektivs direkt, ohne Umlenkung durch die Umlenkeinrichtung auf die Probe fallen zu lassen, während das Beleuchtungslicht, nachdem dieses das Objektiv durchlaufen hat, mit der Umlenkeinrichtung derart umgelenkt wird, dass es sich unter einem von Null Grad verschiedenen Winkel, insbesondere unter einem Winkel größer als 10 Grad, ganz insbesondere unter einem rechten Winkel, zur optischen Achse des Objektivs ausbreitet. Hierbei ist jedoch zu berücksichtigen, dass die Foki von Beleuchtungslicht und Manipulationslicht nicht denselben Abstand zum Objektiv aufweisen, was beispielsweise durch ein Verschieben des Objektivs um die Abstandsdifferenz entlang der optischen Achse beim Umschalten zwischen einer Beaufschlagung mit Manipulationslicht und Beleuchtungslicht kompensiert werden kann.

Es ist auch möglich, beim Umschalten zwischen einer Beaufschlagung mit Manipulationslicht und Beleuchtungslicht auch zwischen unterschiedlichen Objektiven, nämlich durch Verbringen des jeweils benötigten Objektivs in die Objektivarbeitsposition, umzuschalten, um das vorgenannte Problem der Abstandsdifferenz zu vermeiden. Die Brechkraft der Objektive ist dabei derart gewählt, dass der jeweilige Fokusabstand zur Objektivarbeitsposition für das über die Umlenkeinrichtung laufende Beleuchtungslicht derselbe ist, wie für das nicht über die Umlenkeinrichtung laufende Manipulationslicht.

Abgesehen von dieser Ausführung kann ein Wechsel des Objektivs auch aus anderen Gründen erfolgen. Dies auch dergestalt, dass die Abstandsdifferenz nicht durch die unterschiedliche Brechkraft kompensiert wird, sondern beispielsweise durch (das bereits oben erwähnte) Verschieben des Objektivs entlang der optischen Achse.

Die Verschiebbarkeit oder Verfahrbarkeit des Objektivs kann mit einem Elektromotor oder mit einem mechanischen Antrieb realisiert werden. Zum Beispiel, kann die Verfahrbarkeit in der X-, Y- und/oder Z- Richtung durch Piezoelemente oder konventionelle Antriebstechniken realisiert werden.

Will man beispielsweise eine Manipulation, beispielsweise mittels einer punktförmigen, linienförmigen oder frei wählbaren flächenförmigen Manipulations-Beleuchtung, bei einer numerischen Apertur durchführen, die höher ist, als die für das Beleuchtungslicht, kann man dies nach einer möglichen Ausführung der Erfindung erreichen, indem man ein Beleuchtungsobjektiv mit einer höheren numerischen Apertur zur Manipulation einschwenkt und zur Beobachtung und Beleuchtung mit dem Beleuchtungslicht wieder auf das ursprüngliche Beleuchtungsobjektiv mit einer niedrigeren numerischen Apertur zurückschwenkt. Um in dem gleichen Fokusbereich zu manipulieren, wo auch regulär beleuchtet wird, muss beim Wechsel des Objektivs eine Verstellung entlang der optischen Beleuchtungsachse durchgeführt werden.

Die Verwendbarkeit hochaperturiger Objektive hat den besonderen Vorteil, dass das Beleuchtungslichtblatt und/oder ein Manipulationslichtbündel, besonders dünn ausgeformt sein kann. In Bezug auf eine SPIM-Abbildung wird hierdurch das Auflösungsvermögen erhöht.

Will man beispielsweise eine Beleuchtung und Manipulation, beispielsweise mittels einer punktförmigen, linienförmigen oder frei wählbaren flächenförmigen Beleuchtung, mit demselben Objektiv, insbesondere mit einer hohen numerischen Apertur, durchführen, so kann man dies, gemäß einer möglichen Ausführung der Erfindung, indem man das Objektiv, das das Manipulationslicht und das Beleuchtungslicht fokussiert, um einen vorgegebenen Betrag seitlich, also senkrecht zur optischen Achse, verschiebt, womit sichergestellt wird, dass weiterhin die Umlenkeinrichtung getroffen wird. Der Grund dafür ist, dass Objektive mit einer hohen numerischen Apertur typischerweise auch Objektive mit einer höheren Vergrößerung sind, sprich mit einem kleineren Scanfeld. Will man jedoch weiterhin eine große Öffnung der Umlenkeinrichtung und damit größere Objekte zwischen den Umlenkeinrichtungen positionieren, muss das Beleuchtungsobjektiv um einen bestimmten Betrag seitlich versetzt werden, so dass weiterhin die Umlenkeinrichtung durch den Scanstrahl getroffen wird. Erhöht sich die Vergrößerung des Beleuchtungsobjektiv um den Faktor 2, muss eine seitliche Verschiebung des Beleuchtungsobjektivs um den Betrag erfolgen, der sich errechnet aus: Scanfeld der niedrigeren Vergrößerung minus Scanfeld der höheren Vergrößerung geteilt durch 2. Will man die Manipulation nicht über die Umlenkeinrichtung durchführen, sondern direkt, und will man in der Fokusebene manipulieren, wobei auch über die Umlenkeinrichtung beleuchtet wird, muss das Objektiv um einen bestimmten Betrag entlang der optischen Achse verschoben werden; typischerweise errechnet sich dieser Betrag als die halbe Öffnung der Umlenkeinrichtung in mm. Jedoch können auch andere Werte verwendet werden, falls man andere Bereiche der Probe manipulieren will.

Das Lichtblatt kann beispielspielsweise mit einer Zylinderoptik, beispielsweise aus einem im Querschnitt runden Lichtbündel, beispielsweise eines Lasers, erzeugt werden. Im Sinne der vorliegenden Erfindung wird unter einer Zylinderoptik jegliche astigmatische Optik und/oder jegliche Optik verstanden, die in einer Richtung senkrecht zur Fortpflanzugsrichtung des Lichts stärker fokussiert, als in einer anderen Richtung senkrecht zur Fortpflanzugsrichtung des Lichts.

Bei einer ganz besonders vorteilhaften Ausführung ist jedoch vorgesehen, dass das Beleuchtungslichtblatt ein Quasi-Lichtblatt ist, das aus einem in einer Lichtblattebene kontinuierlich hin- und her bewegtem Beleuchtungslichtbündel besteht. Hierzu kann die optische Vorrichtung beispielsweise eine hinsichtlich des Ablenkwinkels einstellbare Strahlablenkvorrichtung aufweisen, mit der ein Beleuchtungslichtbündel vorzugsweise derart schnell in einer Beleuchtungsebene bewegbar ist, dass de facto in der Beleuchtungsebene ein Beleuchtungslichtblatt vorliegt, und/oder dass diese Beleuchtung mit den zur Detektion des von der Probe ausgehenden Lichtes vorgesehenen Detektoren, und den nachgeschalteten Auswertevorrichtungen eines Mikroskops nicht von einem kontinuierlichen, beispielsweise mit einer Zylinderoptik erzeugten, Beleuchtungslichtblatt unterscheidbar ist, und/oder dass die aufgenommenen Bilddaten sich nicht oder nicht wesentlich von den Daten unterscheiden, die bei einer Beleuchtung mit einem kontinuierlichen Beleuchtungslichtblatt erzeugt würden.

Eine solche Strahlablenkeinrichtung kann beispielsweise wenigstens einen Galvanometerspiegel aufweisen. Insbesondere kann beispielsweise auch die ohnehin vorhandene Strahlablenkvorrichtung eines Scanmikroskops, insbesondere eines konfokalen Scanmikroskops, verwendet werden, insbesondere wenn die optische Anordnung durch Umrüstung eines Scanmikroskops hergestellt ist oder das erfindungsgemäße Verfahren mithilfe eines Scanmikroskops ausgeführt wird.

Insbesondere wenn die Form des Lichtblattes einstellbar sein soll, ist es von besonderem Vorteil, wenn die Strahlablenkvorrichtung mehrere, vorzugsweise in unterschiedlichen, insbesondere zueinander senkrechten, Ablenkenebenen ablenkende Galvanometerspiegel, beispielsweise einen X-Galvanometerspiegel und einen Y-Galvanometerspiegel, oder andere einstellbare Ablenkmittel, aufweist. Insbesondere an dem Beispiel der Erzeugung eines ebenen Quasi-Lichtblattes bei Verwendung einer Umlenkeinrichtung, die einen oder mehrere gekrümmte Umlenkspiegel aufweist, wird der Vorteil mehrerer Ablenkmittel deutlich: Würde man einen gekrümmten Umlenkspiegel lediglich durch Ablenkung eines Beleuchtungslichtstrahls in einer Ebene beleuchten, so würde (da die Spur des Beleuchtungslichtstrahls auf dem gekrümmten Umlenkspiegel zwangsläufig gekrümmt ist) ein Quasi-Lichtblatt resultieren, dass nicht eben, sondern gekrümmt ist. Es ist jedoch durch Verwendung von zwei, in unterschiedlichen Ablenkebenen ablenkenden Galvanometerspiegel möglich, die Spur des Beleuchtungslichtstrahls der Art auf den Umlenkspiegel zu zeichnen, dass im Ergebnis ein ebenes Quasi-Lichtblatt resultiert.

Umgekehrt ist es (auch bei Verwendung eines ebenen Umlenkspiegels) möglich, durch geeignete Steuerungs der Galvanometerspiegel ein weitgehend beliebig gegründetes Quasi-Lichtblatt zu erzeugen, falls dies gewünscht ist.

Vorzugsweise ist die Lichtblattebene, in der sich das umgelenkte Beleuchtungslichtblatt ausbreitet, senkrecht zur optischen Achse des Beleuchtungsobjektivs und/oder des Detektionsobjektivs ausgerichtet.

Wie bereits erwähnt, kann vorteilhaft vorgesehen sein, dass das Beleuchtungslicht und/oder das Manipulationslicht, insbesondere mit einer hinsichtlich des Ablenkwinkels einstellbaren Strahlablenkvorrichtung, durch das Objektiv hindurch und ggf. über weitere optische Elemente auf die Umlenkeinrichtung gelenkt wird.

Inbesondere kann vorteilhaft auch vorgesehen sein, dass das Beleuchtungslicht und/oder das Manipulationslicht mit einer mehrere Umlenkmittel, insbesondere Umlenkspiegel, aufweisenden Umlenkeinrichtung, die dem in der Objektivarbeitsposition befindlichen Objektiv nachgeschaltet ist, - simultan oder sequentiell - umgelenkt wird.

Die Umlenkmittel können insbesondere unterschiedlich angeordnet und/oder unterschiedlich ausgerichtet und/oder von unterschiedlichem Typ sein. Beispielsweise kann vorgesehen sein, dass, insbesondere mittels einer hinsichtlich des Ablenkwinkels einstellbaren Strahlablenkvorrichtung, das Manipulationslicht und/oder das Beleuchtunsglicht abwechselnd auf unterscheidlich positionierte und/oder ausgerichtete Umlenkmittel gelenkt wird, wobei jedes Umlenkmittel das Manipulationslicht und/oder das Beleuchtunsglicht auf die Probe, insbesondere auf denselben Probenbereich, umlenkt. Auf diese Art kann beispielsweise ein und derselbe Probenbereich aus unterschiedlichen Richtungen mit Manipulationslicht beaufschlagt werden.

Inbesondere ist so eine isozentrische und/oder stereotaktische Beaufschlagung ein und desselben Probenbereichs ermöglicht. Auf diese Weise kann beispielsweise ein interessierender Probenbereich intensiv mit Manipulationslicht beaufschlagt werden, während die umliegenden Bereiche, insbesondere weil sich die Wirkung des einfallenden Manipulationslicht außerhalb des Probenbereichs verteilt, geschont werden. Insbesondere ist es beispielsweise möglich, dass das Manipulationslicht als Manipulationslichtstrahl, insbesondere mit einer hinsichtlich des Ablenkwinkels einstellbaren Strahlablenkvorrichtung und über eine, dem Objektiv nachgeschaltete Umlenkeinrichtung, die insbesondere mehrere Umlenkmittel aufweist, auf einem Kegelmantel bewegt wird.

Für besondere Anwendungen, beispielsweise wenn unterschiedliche Probenbereiche unterschiedlich manipuliert werden sollen, kann die Leistung des Manipualtionslichts während einer Manipualtion und/oder während einer Strahlablenkung verändert werden.

Es ist auch möglich, das eine Umlenkeinrichtung mehrere Umlenkmittel aufweist oder derart geformt, insbesondere gekrümmt, ist, dass das Beleuchtungslicht und/oder das Manipulationslicht aus unterschiedlichen Richtungen auf die Probe, insbesondere einen interessierenden Probenbereich, gerichtet werden kann.

Bei einer möglichen Ausführung läuft das von der Probe ausgehende Detektionslicht durch das Objektiv und/oder wird mittels des Objektivs, das das Beleuchtungslicht fokussiert, kollimiert.

Vorzugsweise läuft jedoch das von der Probe ausgehende Detektionslicht durch ein Detektionsobjektiv und/oder wird mit einem Detektionsobjektiv kollimiert, das von dem Objektiv, das das Beleuchtungslicht und/oder das Manipulationslicht fokussiert, verschieden ist.

Insbesondere kann vorteilhaft vorgesehen sein, dass die optische Achse des Objektivs, das das Beleuchtungslicht und/oder das Manipulationslicht fokussiert, und die optische Achse des Detektionsobjektivs parallel und/oder kollinear zueinander ausgerichtet sind. Eine solche Ausführung hat den besonderen Vorteil, dass die optische Vorrichtung besonders kompakt und robust ausgeführt werden kann, und dass der Probenbeleuchtungsbereich besonders einfach zugänglich ist, so dass ein schnelles und präzises, sukzessives Verbringen der Proben in den Probenbeleuchtungsbereich ermöglicht ist.

Insbesondere kann vorteilhaft vorgesehen sein, dass das Beleuchtungslichtblatt zunächst in vertikaler Richtung durch das Beleuchtungsobjektiv verläuft und anschließend in horizontale Richtung mit der Umlenkeinrichtung umgelenkt wird, um eine Schicht der Probe zu beleuchten. Vorzugsweise verläuft das von der beleuchteten Schicht ausgehende Licht, insbesondere Fluoreszenzlicht, in vertikaler Richtung durch ein Detektionsobjektiv. Ein solcher Aufbau ermöglicht die Verwendung von aufrechten oder inversen Standard-Mikroskopstativen zur Herstellung der erfindungsgemäßen optischen Vorrichtung.

Bei einer ganz besonders vorteilhaften Ausführung ist vorgesehen, dass das Objektiv, das das Beleuchtungslicht und/oder das Manipulationslicht fokussiert, und die Umlenkeinrichtung, die beispielsweise einen oder mehrere Umlenkspiegel aufweisen kann, relativ zueinander beweglich angeordnet sind. Alternativ oder zusätzlich kann auch vorgesehen sein, dass die Umlenkeinrichtung beweglich an dem Objektiv, das das Beleuchtungslicht und/oder das Manipulationslicht fokussiert, befestigt ist, und/oder dass die Umlenkeinrichtung beweglich an dem Detektionsobjektiv befestigt ist. Diese Ausführungen haben den Vorteil, dass einfach eingestellt werden kann, ob das Beleuchtungslicht und/oder das Manipulationslicht direkt oder über die Umlenkeinrichtung auf die Probe treffen. Außerdem kann durch die Einstellung der Relativposition zwischen dem Objektiv, das das Beleuchtungslicht und/oder das Manipulationslicht fokussiert, und der Umlenkeinrichtung die Einfallsrichtung des Beleuchtungslichts und/oder des Manipulationslichts auf die Probe verändert werden.

Es ist alternativ oder zusätlich auch möglich, dass die Umlenkeinrichtung um das Detektionsobjektiv und/oder die optische Achse des Detektionsobjektivs rotierbar angeordnet, insbesondere an dem Detektionsobjektiv befestigt, ist. Eine solche Ausführung erlaubt es auf einfache Weise beispielsweise die Einfallsrichtung des Beleuchtungslichts und/oder des Manipulationslichts auf die Probe einzustellen oder zu verändern.

In vorteilhafter Weise kann vorgesehen sein, dass mit dem Manipulationslicht und/oder mit dem Beleuchtungslicht eine Zweiphotonenanregung bewirkt wird. Insoweit kann die erfindungsgemäße optische Anordnung vorteilhaft einen Pulslaser, insbesondere einen Pikosekunden- oder Femtosekundenlaser, zur Erzeugung des Beleuchtungslichts und/oder des Manipulationslichts aufweisen.

Wie bereits erwähnt, kann die erfindungsgemäße optische Anordnung durch eine Umrüstung eines Scanmikroskops, insbesondere eines konfokalen Scanmikroskops, hergestellt sein. Es ist auch möglich, dass die erfindungsgemäße optische Anordnung ein Scanmikroskop, insbesondere ein konfokales Scanmikroskop, beinhaltet. Dies vorzugsweise derart, dass sie, losgelöst von der Erzeugung einer SPIM-Abbildung, auch als Scanmikroskop betrieben werden kann.

Wie bereits erwähnt, kann in konstruktiv besonders einfacher Weise die Umlenkeinrichtung an einem auf der Detektionsseite angeordneten Detektionsobjektiv der Detektionseinrichtung angeordnet sein. Hierbei wird in eleganter Weise ein vorhandenes Bauteil in Form des Detektionsobjektivs genutzt, um daran die für die Erzeugung des Lichtblatts erforderliche Umlenkeinrichtung sicher zu positionieren. Hinsichtlich einer besonders hohen Flexibilität und einer einfachen Anpassung an unterschiedliche Erfordernisse beim Einsatz der optischen Anordnung kann die Umlenkeinrichtung, insbesondere zerstörungsfrei wieder lösbar, an dem Detektionsobjektiv angeordnet sein. Mit anderen Worten kann die Umlenkeinrichtung für eine Mikroskopieanwendung mit einem Beleuchtungslichtblatt an dem Detektionsobjektiv angeordnet sein und für eine andere gewünschte Beleuchtung vom Detektionsobjektiv abgenommen sein. Des Weiteren können unterschiedlich dimensionierte Umlenkeinrichtungen im Wechsel verwendet werden und im Falle von Beschädigungen einfach ausgetauscht werden.

Die Umlenkeinrichtung kann beispielsweise eine Spiegelanordnung mit vorzugsweise mehreren spiegelnden Elementen und/oder mit mindestens einem Prisma und/oder mindestens einem dichroitischen Strahlteiler aufweisen. Dabei kann die Umlenkeinrichtung in weiter einfacher Weise auf der Frontseite des Detektionsobjektivs angeordnet sein.

Die Spiegelanordnung kann auf einfache Weise zwei ebene und einander gegenüberliegende spiegelnde Elemente zur Beleuchtung und/oder zur Manipulation der Probe von zwei Seiten aus aufweisen. Im Hinblick auf eine besonders sichere Vermeidung von Verschattungen im Bereich der Probe, kann die Spiegelanordnung mehrere ebene oder gekrümmte spiegelnde Elemente aufweisen, die entlang einem Kreisbogen vorgebbarer Länge angeordnet sein können. Die einzelnen spiegelnden Elemente können dabei in einem einzelnen Spiegelaufsatz realisiert sein, so dass die relative Positionierung der spiegelnden Elemente zueinander bei der Herstellung des Spiegelaufsatzes vorgegeben wird.

In weiter vorteilhafter Weise kann der Krümmungsradius der gekrümmten spiegelnden Elemente derart gewählt sein, dass sich sämtliche von den spiegelnden Elementen reflektierte Strahlen oder eine vorgebbare Anzahl von Strahlen von den spiegelnden Elementen in einem Fokuspunkt treffen. In diesem Fokuspunkt liegt dann die größte Strahlenbelastung vor, wobei dies in der Probenmitte vorgesehen sein kann. Für eine derartige Fokussierung in einem einzelnen Fokuspunkt ist der Krümmungsradius gleich dem Radius, der sich von der Probenmitte zu dem Kreisbogen der entlang dem Kreisbogen angeordneten spiegelnden Elemente erstreckt. Für eine Beleuchtung durch ein Lichtblatt sollte der Krümmungsradius größer als zwei derartige Radien von der Probenmitte zum Kreisbogen betragen.

In der Zeichnung ist der Erfindungsgegenstand schematisch dargestellt und wird anhand der Figuren nachfolgend beschrieben, wobei gleich wirkende Elemente mit denselben Bezugszeichen versehen sind. Dabei zeigen:
- Fig. 1: in einer schematischen Seitenansicht ein Beispiel einer optischen Anordnung,
- Fig. 2: in einer schematischen Seitenansicht das Beispiel der optischen Anordnung mit einem gegenüber der Fig. 1 unterschiedlich positionierten Beleuchtungsobjektiv,
- Fig. 3: in einer schematischen Seitenansicht ein Beispiel einer anderen optischen Anordnung, bei der das Beleuchtungsobjektiv seitlich versetzt ist,
- Fig. 4: in einer schematischen Darstellung eine mögliche Umlenkeinrichtung,
- Fig. 5: in einer schematischen Ansicht eine Darstellung einer anderen, möglichen Ausprägung der Umlenkeinrichtung,
- Fig. 6: in einer schematischen Ansicht eine Darstellung einer möglichen Umlenkeinrichtung mit mehreren gekrümmten spiegelnden Elementen, die entlang einem Kreisbogen angeordnet sind, und
- Fig. 7: in einer schematischen Ansicht eine Darstellung einer weiteren, möglichen Umlenkeinrichtung mit mehreren, gekrümmten und spiegelnden Elemente.

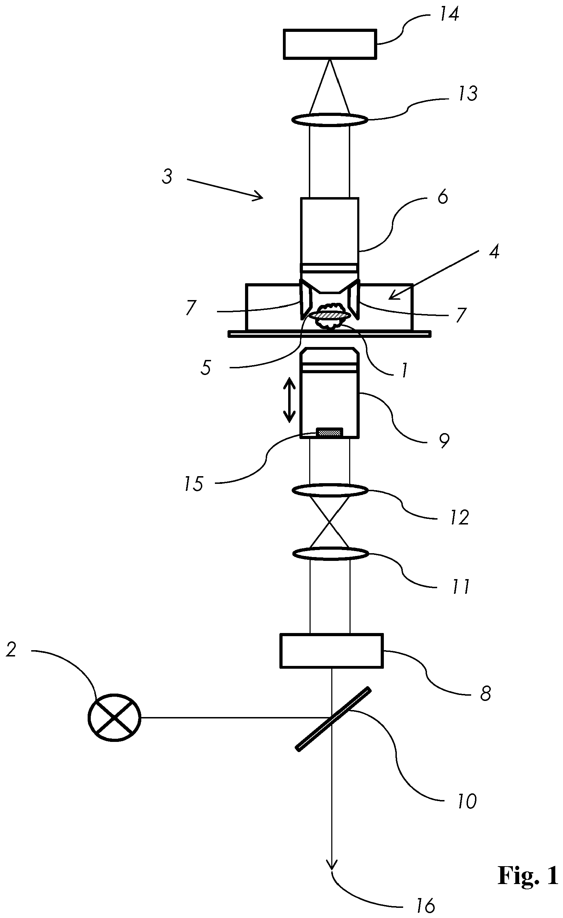

Fig. 1 zeigt in einer schematischen Seitenansicht ein Beispiel einer optischen Anordnung zum Manipulieren einer Probe 1 und zum Abbilden einer Probe mittels SPIM-Technik unter Beleuchtung mit Beleuchtungslicht, insbesondere Anregungslicht zur Fluoreszenzanregung, in Form eines Beleuchtungslichtblatts 5. Das Beleuchtungslicht ist wurde von einer, in dieser Figur nicht dargestellten, Lichtquelle erzeugt und gelangt durch einen Strahlteiler 10 hindurch zu einer einstellbaren Strahlablenkvorrichtung 8 und tritt anschließend über eine Scanlinse 11 und eine Tubuslinse 12 durch die Eintrittspupille 15 eines in einer Objektivarbeitsposition angeordneten Objektivs 9, das das Beleuchtungslicht fokussiert. Das Beleuchtungslicht wird nach dem Durchlaufen des Objektivs 9 mittels einer Umlenkeinrichtung 4, die Umlenkspiegel 7 aufweist, derart umgelenkt, dass es sich unter einem von Null Grad verschiedenen Winkel zur optischen Achse des Objektivs 9 ausbreitet.

Die Strahlablenkvorrichtung 8 kann insbesondere dazu ausgebildet sein, einfallendes Licht unabhängig voneinander in zwei unterschiedlichen Richtungen (insbesondere einer x-Richtung und einer y-Richtung) abzulenken. Beispielsweise kann die Strahlablenkvorrichtung 8 zwei Galvanometerspiegel beinhalten, deren Drehachsen in zueinander senkrechten Ebenen angeordnt sind. Alternativ kann die Strahlablenkvorrichtung 8 beispielsweise auch einen kardanisch gelagerten Spiegel aufweisen.

Vorzugsweise ist das Beleuchtungslichtblatt 5, das in der Figur lediglich ganz schematisch eingezeichnet ist, ein Quasi-Lichtblatt, das dadurch erzeugt wurde, dass das in Form eines Beleuchtungslichtbündels von der nicht dargestellten Lichtquelle emittierte Beleuchtungslicht mittels der Strahlablenkvorrichtung 8 schnell hin und her bewegt wird. Auf diese Weise kann insbesondere eine homogene Intensitätsverteilung erreicht werden. Es ist jedoch auch möglich, das Beleuchtungslichtblatt 5 mittels einer astigmatischen Optik herzustellen.

Das von der mit dem Beleuchtungslichtblatt 5 beleuchteten Schicht der Probe ausgehende Detektionslicht wird mit einer Detektionsvorrichtung 3 detektiert. Das Detektionslicht wird mittels eines Detektionsobjektivs 6 kollimiert und wird anschließend mittels einer Optik 13 auf einen Detektor 14, der beispielsweise als Flächendetektor, insbesondere als CCD-Kamera oder als Sensor auf CMOS-Basis, ausgebildet sein kann, abgebildet. Der Detektor erzeugt elektrische Signale, die (ggf. nach einer elektronischen Verarbeitung) zur Darstellung der Probe auf einem Monitor verwendet werden können. Durch Verschieben der Probe entlang der optischen Achse des Objektivs, kann sukzessive ein Stapel von zweidimensionalen Abbildungen gewonnen werden, die zu einer 3D-Abbildung zusammengesetzt werden können.

Beispielsweise kann auf diese Weise zunächst eine erste Abbildung der Probe oder wenigstens einer Probenschicht oder eines besonders interessierenden Probenbereichs gewonnen werden, um anschließend, was nachfolgend beschrieben ist, eine Manipulation durchzuführen, deren Auswirkungen dann wieder durch Erzeugung einer weiteren Abbildung sichtbar gemacht werden können.

Die optische Vorrichtung weist eine weitere Lichtquelle 2 auf, die Manipulationslicht emittiert. Das von der Lichtquelle 2 erzeugte Manipulationslicht wird von dem Strahlteiler 10 zu der Strahlablenkvorrichtung 8 umgelenkt und gelangt anschließend über die Scanlinse 11 und die Tubuslinse 12 zu dem in der Objektivarbeitsposition angeordneten Objektiv 9. Das Objektiv 9 fokussiert auch das Manipulationslicht. Allerdings lenkt die Strahlablenkvorrichtung 8 das Manipulationslicht - anders als zuvor das Beleuchtungslicht - nicht auf einen der Umlenkspiegel 7, sondern derart, dass es nach Durchlaufen des Objektivs 9 direkt auf die Probe 1 trifft.

Hierbei ist zu berücksichtigen, dass die Foki von Beleuchtungslicht und Manipulationslicht unterschiedliche Positionen innerhalb der Probe aufweisen, so dass mit dem Fokus des Manipulationslichtes nicht der zuvor mit dem Fokus des Beleuchtungslichtblattes beleuchtete Bereich manipuliert werden kann.

Dies wird durch Verschieben des Objektivs 9 entlang der optischen Achse korrigiert, was in der Figur durch den Doppelpfeil angedeutet ist. Die Verschiebeweg ist vorzugsweise so groß, wie die ursprüngliche Abstandsdifferenz der Foki relativ zu dem Objektiv.

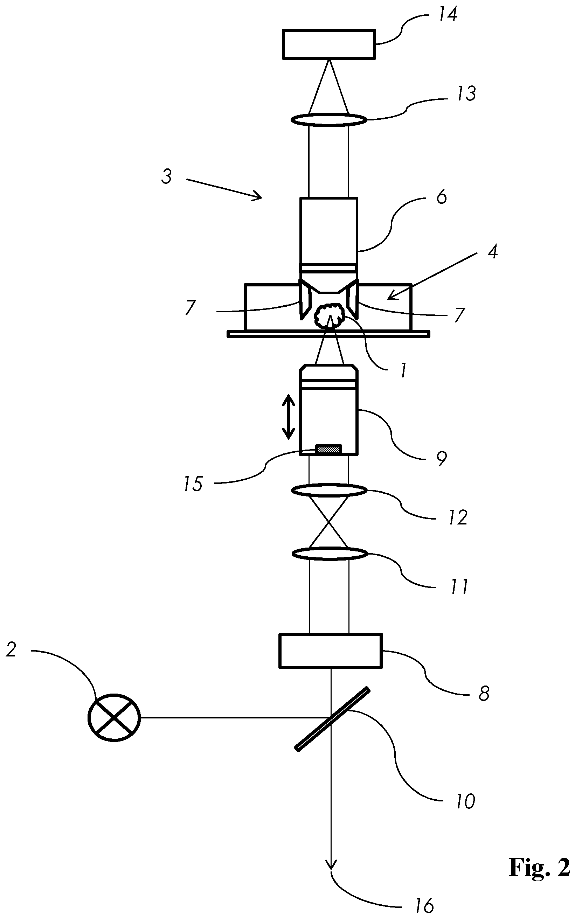

Figur 2 zeigt die zur Vornahme einer Manipulation nötige Stellung mit vergrößerten Probe-Objektiv-Abstand. Wie oben ausführlich beschrieben, kann eine Kompensation jedoch auch auf andere Weise, beispielsweise durch Verwendung zusätzlicher Optiken (insbesondere ausschließlich in dem Teil des Strahlenganges, in dem ausschließlich das Manipulationslicht propagiert, beispielsweise zwischen der weiteren Lichtquelle 2 und dem Strahlteiler 10) und/oder durch Verwenden unterschiedlicher Objektive für Beleuchtung und Manipulation, erfolgen.

Nach erfolgter Manipualtion kann das Objektiv wieder zurück verschoben werden, um in der oben beschriebenen Weise erneut eine Abbildung der Probe, insbesondere des manipulierten Probenbereichs, zu erzeugen.

Die Umlenkeinrichtung 4 ist an dem Detektionsobjektiv 6 angeordnet. Die Umlenkeinrichtung 4 weist zwei Umlenkspiegel 7 auf, um die Probe wahlweise von zwei Seiten beleuchten zu können. Auf diese Weise können insbesondere Strukturen von einer Seite beleuchtet werden, die von der anderen Seite aus, beispielsweise wegen Abschattungen durch Teile der Probe selbst, nicht oder nur unzureichend mit Licht beaufschlagbar sind.

Es ist zusätzlich möglich, auch mittels des in der Objektivarbeitsposition befindlichen Objektivs 9 von der Probe ausgehendes, weiteres Detektionslicht 16 zu kollimieren und einem (in den Figuren nicht dargestellten) Detektor zuzuführen. Hierbei ist der Strahlteiler 10 derart ausgebildet, dass das Detektionslicht 16 passieren kann.

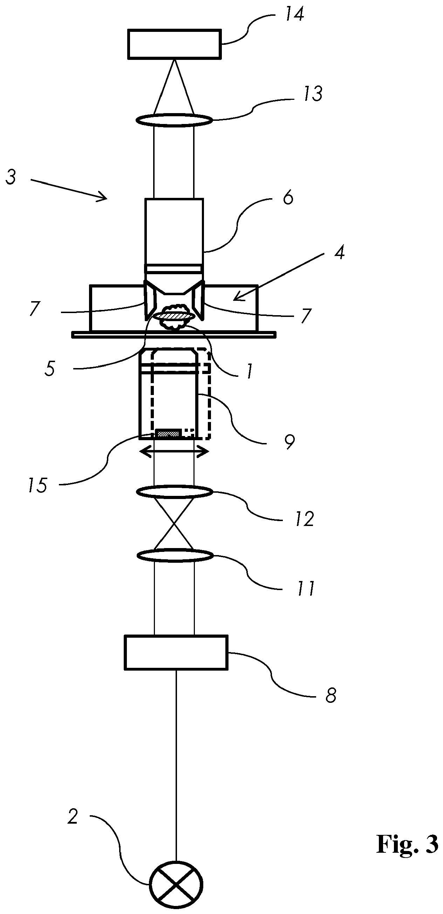

Fig. 3 zeigt in einer schematischen Seitenansicht ein Beispiel einer anderen optischen Anordnung, die es erlaubt, auch ein Objektiv 9 mit hoher nummerischer Apertur zu verwenden. Typischer Weise haben Objektive mit höherer nummerischer Apertur den Vorteil eines hohen Auflösungsvermögens, jedoch ein kleineres Sehfeld (Scanfeld). Bei der in der Figur dargestellten Ausführung ist daher vorgesehen, das Objektiv 9 seitlich verschieben zu können (angedeutet duch den Doppelpfeil und die doppelte Darstellung des Objektivs 9), um auch bei Verwendung von Objektiven 9 mit hoher nummerischer Apertur die Umlenkeinrichtung zu treffen. Vorzugsweise wird zusätzlich zu der seitlichen Verschiebung eine Verschiebung entlang der optischen Achse des Objektivs 9 vorgenommen, um die Beleuchtungs- und Detektionsgeometrie zu bewahren.

Anstelle von zwei Lichtquellen zur getrennten Erzeugung des Manipulationslichtes und des Beleuchtungslichtes, kann alternativ vorgesehen sein, dass sowohl das Manipulationslicht, als auch das Beleuchtungslicht von derselben Lichtquelle erzeugt wird. Dies könnte beispielsweise die Lichtquelle 2 sein. Die Lichtquelle 2 kann je nach Anwendungsfall zur Erzeugung von UV- und/oder IR- und/oder sichtbarem Licht ausgebildet sein.

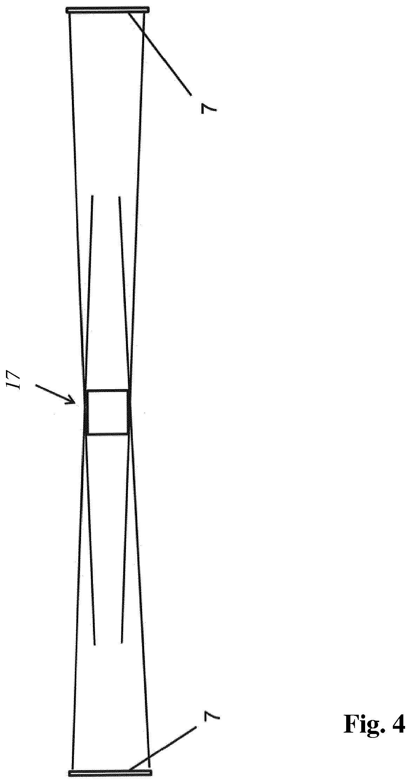

Die Figuren 4 bis 7 zeigen in einer Draufsicht mit Blickrichtung entlang der optischen Achse des Objektivs 9 unterschiedliche Ausführungsbeispiele von Umlenkeinrichtungen 4 mit unterschiedlich ausgebildeten und unterschiedlich angeordneten Umlenkspiegeln 7 und mögliche Strahlverläufe des Manipulations und/oder Beleuchtungslichtes.

Fig. 4 zeigt in einer schematischen Ansicht eine mögliche Umlenkeinrichtung 4 mit zwei Umlenkspiegeln 7, die einander gegenüberliegend angeordnet sind. Die Umlenkspiegel lenken das Beleuchtungslicht, das als Beleuchtungslichtblatt ausgebildet ist, zur Ausleuchtung eines Sehfeldes 17, in dem die Probe oder wenigstens ein Teil der Probe positioniert wird, ab. Das Sehfeld 17 entspricht vorzugsweise dem Bereich, welcher auf einen Detektor, insbesondere einen 2D-Detektor, abgebildet wird. Es ist natürlich alternativ oder zusätzlich auch möglich, mittels der Umlenkspiegel 7 Manipualtionslicht auf eine Probe zu lenken.

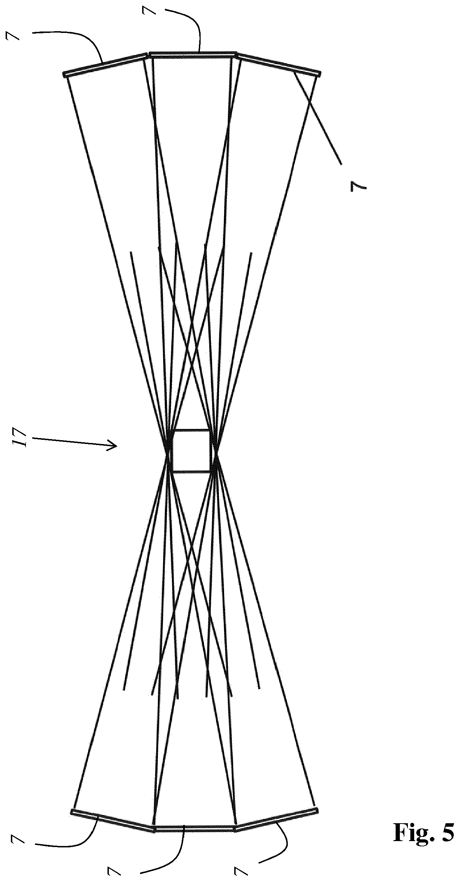

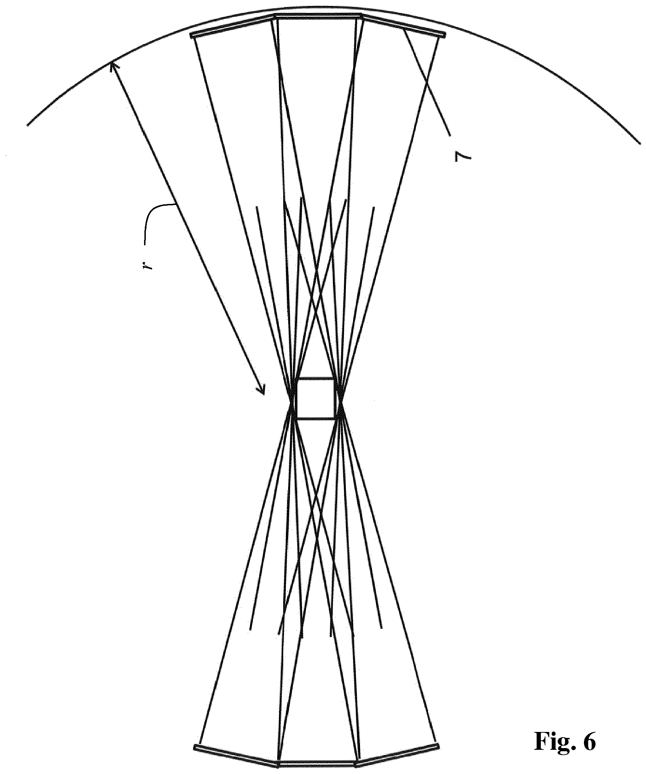

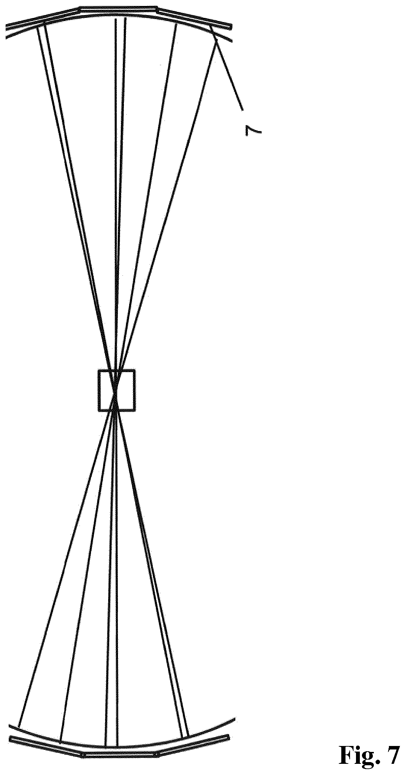

Fig. 5 zeigt in einer schematischen Ansicht eine Darstellung einer anderen, möglichen Ausprägung der Umlenkeinrichtung mit mehreren Umlenkspielgeln 7, die auf gegenüberliegenden Seiten jeweils entlang einem Kreisbogen vorgebbarer Länge angeordnet sind. Eine solche Umlenkeinrichtung 4 ist, wie auch die in den Figuren 6 und 7 gezeigten Umlenkeinrichtungen, ganz besonders für eine isozentrische und/oder stereotaktische Beaufschlagung eines Probenbereichs aus mehreren unterschiedlichen Richtungen geeignet.

Fig. 6 zeigt in einer schematischen Ansicht eine Darstellung einer möglichen Umlenkeinrichtung 4 mit mehreren gekrümmten Umlenkspiegeln 7, die entlang einem Kreisbogen angeordnet sind. Der Krümmungsradius der Umlenkspiegel 7 beträgt vorzugsweise mehr als den zweifachen Radius r des Kreisbogens.

Fig. 7 zeigt in einer schematischen Ansicht eine weitere, vorteilhafte Umlenkeinrichtung 4 mit einander gegenüberliegenden und entlang einem Kreisbogen vorgebbarer Länge angeordneten, gekrümmten Umlenkspiegeln 7. Der Krümmungsradius der Umlenkspiegel 7 entspricht dem Radius des Kreisbogens, so dass eine Fokussierung des durch die spiegelnden Elemente 7 reflektierten Lichts im Zentrum, des durch den Kreisbogen gebildeten Kreises, vorliegt. Alle reflektierten Strahlen treffen sich dabei in der Mitte, so dass eine maximale Belastung in eines ausgewählten Probenbereichs durch eine stereotaktische Beleuchtung erfolgen kann. Der Probenbereich kann beispielsweise durch Verschieben der Probe mit Hilfe eines geeignet, vorzugeweise in allen drei Raumrichtungen, einstellbaren Verschiebetisch, auf dem die Probe gelagert ist, in dem Zentrum positioniert werden. Insbesondere kann der Verschiebtisch motorisch einstellbar ausgebildet sein.

Basierend auf den in den Fig. 5 bis 7 dargestellten Umlenkeinrichtungen kann eine vielseitige Anwendung der optischen Anordnung gewährleistet werden. Unabhängig von der konkreten Anordnung und Ausgestaltung der einzelenen Umlenkelemente, kann jede Umlenkeinrichtung als vorkonfektionierter Aufsatz, insbesondere als vorkonfektionierter Aufsatz zur Befestigung an einem Objektiv und/oder Detektionsobjektiv, ausgebildet sein. Zum Wechsel zwischen unterschiedlichen Anwendungen ist dann lediglich der Aufsatz mit der Spiegelelement-Anordnung auf einfache Weise auszutauschen.

Hinsichtlich weiterer vorteilhafter Ausgestaltungen der erfindungsgemäßen optischen Anordnung wird zur Vermeidung von Wiederholungen auf den allgemeinen Teil der Beschreibung sowie auf die beigefügten Ansprüche verwiesen.

## Patentansprüche

1. Verfahren, bei dem unter Verwendung einer optischen Anordnung eine Probe (1) mit Manipulationslicht manipuliert wird, und die Probe (1) mittels SPIM-Technik unter Beleuchtung mit Beleuchtungslicht, insbesondere Anregungslicht zur Fluoreszenzanregung, in Form eines Beleuchtungslichtblatts (5), abgebildet wird, **dadurch gekennzeichnet, dass** das Manipulationslicht und das Beleuchtungslicht durch
a. dasselbe Objektiv (9) der optischen Anordnung, das in eine Objektivarbeitsposition angeordnet ist, oder
b. durch unterschiedliche Objektive der optischen Anordnung, die nacheinander in eine Objektivarbeitsposition gebracht werden,
fokussiert werden und dass dem in der Objektivarbeitsposition befindlichen Objektiv (9) zumindest eine Umlenkeinrichtung (7) der optischen Anordnung nachgeschaltet ist, die entweder das Beleuchtungslicht oder das Manipulationslicht so umlenkt,
dass das Beleuchtungslicht und das Manipulationslicht aus unterschiedlichen Richtungen auf die Probe (1) treffen,
wobei bei Verwendung desselben Objektivs (9) für das Manipulationslicht und das Beleuchtungslicht die Probe (1) zeitlich getrennt mit dem Manipulationslicht und dem Beleuchtungslicht beaufschlagt wird und beim Umschalten zwischen einer Beaufschlagung mit dem Manipulationslicht und einer Beaufschlagung mit dem Beleuchtungslicht durch Verschieben des Objektivs (9) entlang dessen optischer Achse eine Abstandsdifferenz entlang der optischen Achse kompensiert wird, die dadurch auftritt, dass die Foki des Manipulationslichts und des Beleuchtungslichts nicht denselben Abstand zum Objektivs (9) aufweisen, und
a. das Beleuchtungslichtblatt (5) ein Quasi-Lichtblatt ist, das aus einem kontinuierlich hin- und her bewegtem Beleuchtungslichtbündel besteht, oder dass
b. das Beleuchtungslichtblatt (5) ein Quasi-Lichtblatt ist, das aus einem kontinuierlich mit einer hinsichtlich des Abklenkwinkels einstellbaren Strahlablenkeinrichtung (8) der optischen Anordnung hin- und her bewegtem Beleuchtungslichtbündel besteht, oder dass
c. eine Zylinderoptik der optischen Anordnung vorhanden ist, die das Beleuchtungslichtblatt (5) erzeugt.

2. Verfahren nach Anspruch 1, **dadurch gekennzeichnet, dass**
a. die Probe (1) zeitlich nacheinander zunächst mit dem Manipulationslicht und dann mit dem Beleuchtungslicht beleuchtet wird, oder dass
b. die Probe (1) zeitlich nacheinander zunächst mit dem Beleuchtungslicht und dann mit dem Manipulationslicht beleuchtet wird, oder dass
c. die Probe (1) abwechselnd mit dem Beleuchtungslichtblatt (5) und dem Manipulationslicht beleuchtet wird.

3. Verfahren nach Anspruch 1 oder 2, **dadurch gekennzeichnet, dass** das Beleuchtungslicht, nachdem dieses das Objektiv (9) durchlaufen hat, mit der Umlenkeinrichtung (7) derart umgelenkt wird, dass es sich unter einem von Null Grad verschiedenen Winkel, insbesondere unter einem Winkel größer als 10 Grad, ganz insbesondere unter einem rechten Winkel, zur optischen Achse des Objektivs (9) ausbreitet, während das Manipulationslicht nach dem Durchlaufen des Objektivs (9) ohne Umlenkung auf die Probe (1) trifft.

4. Verfahren nach einem der Ansprüche 1 bis 3, **dadurch gekennzeichnet, dass** das Beleuchtungslicht oder Manipulationslicht mit einer hinsichtlich des Ablenkwinkels einstellbaren Strahlablenkeinrichtung (8) der optischen Anordnung auf die Umlenkeinrichtung (7) gelenkt wird.

5. Verfahren nach einem der Ansprüche 1 bis 4, **dadurch gekennzeichnet, dass** die Umlenkeinrichtung mehrere unterschiedliche und/oder unterschiedlich angeordnte und/oder unterscheidliche ausgerichtete Umlenkmittel aufweist, insbesondere Umlenkspiegel, zum Umlenken des von dem in der Objektivarbeitsposition befindlichen Objektiv fokussierten Beleuchtungslichts oder des von dem in der Objektivarbeitsposition befindlichen Objektiv fokussierten Manipulationslichts.

6. Verfahren nach einem der Ansprüche 1 bis 5, **dadurch gekennzeichnet, dass**
a. die Probe (1), insbesondere ein und derselbe zu manipulierende Probenbereich, aus mehreren, unterschiedlichen Richtungen mit Manipulationslicht beaufschlagt wird, und/oder dass
b. ein zu manipulierender Probenbereich isozentrisch und/oder stereotaktisch mit dem Manipulationslicht beaufschlagt wird, und/oder dass
c. das Manipulationslicht als Manipulationslichtstrahl, insbesondere mit einer Strahlablenkeinrichtung (8) der optischen Anordnung und über eine, dem Objektiv (9) nachgeschaltete, Umlenkeinrichtung (7) der optischen Anordnung auf einem Kegelmantel bewegt wird, und/oder dass
d. eine Leistungsänderungsvorrichtung der optischen Anordnung die Leistung des Manipualtionslichts während einer Strahlablenkung verändert.

7. Verfahren nach einem der Ansprüche 1 bis 6, **dadurch gekennzeichnet, dass**
a. von der Probe (1) ausgehendes Detektionslicht durch das Objektiv (9) verläuft und/oder mit dem Objektiv (9) kollimiert wird, das das Beleuchtungslicht fokussiert, oder dass
b. von der Probe (1) ausgehendes Detektionslicht durch ein Detektionsobjektiv (6) der optischen Anordnung verläuft und/oder mit einem Detektionsobjektiv (6) der optischen Anordnung kollimiert wird, das von dem Objektiv (9), das das Beleuchtungslicht und/oder das Manipulationslicht fokussiert, verschieden ist.

8. Verfahren nach Anspruch 7, **dadurch gekennzeichnet, dass** die optische Achse des Objektivs (9), das das Beleuchtungslicht und/oder das Manipulationslicht fokussiert, und die optische Achse des Detektionsobjektivs (6) parallel und/oder kollinear zueinander ausgerichtet sind.

9. Verfahren nach einem der Ansprüche 1 bis 8, **dadurch gekennzeichnet, dass**
a. das Objektiv (9), das das Beleuchtungslicht und/oder das Manipulationslicht fokussiert, und die Umlenkeinrichtung (7) relativ zueinander beweglich angeordnet sind und/oder dass
b. die Umlenkeinrichtung (7) beweglich an dem Objektiv (9), das das Beleuchtungslicht und/oder das Manipulationslicht fokussiert, befestigt ist und/oder dass
c. die Umlenkeinrichtung (7) beweglich an dem Detektionsobjektiv (6) befestigt ist und/oder dass
d. die Umlenkeinrichtung (7) um das Detektionsobjektiv (6) und/oder die optische Achse des Detektionsobjektivs (6) rotierbar angeordnet ist.

10. Verfahren nach einem der Ansprüche 1 bis 9, **dadurch gekennzeichnet, dass**
a. mit dem Manipulationslicht und/oder mit dem Beleuchtungslicht eine Zweiphotonenanregung bewirkt wird und/oder dass
b. ein Pulslaser der optischen Anordnung, insbesondere ein Pikosekunden- oder Femtosekundenlaser, zur Erzeugung des Beleuchtungslichts und/oder der Manipulationslichts vorhanden ist.

11. Verfahren nach einem der Ansprüche 1 bis 10, **dadurch gekennzeichnet, dass** die optische Anordnung durch Umrüstung eines Scanmikroskops, insbesondere eines konfokalen Scanmikroskops, hergestellt ist, und/oder dass die optische Anordnung ein Scanmikroskop, insbesondere ein konfokales Scanmikroskop, beinhaltet.

## Claims

1. A method in which a sample (1) is manipulated with manipulation light using an optical arrangement, and the sample (1) is imaged by means of SPIM technique under illumination with illumination light, in particular excitation light for fluorescence excitation, in the form of an illumination light sheet (5), **characterized in that** the manipulation light and the illumination light are focused by
a. the same objective (9) of the optical arrangement arranged in an objective working position, or
b. by different objectives of the optical arrangement, which are successively brought into an objective working position,
and **in that** at least one deflection device (7) of the optical arrangement is connected downstream of the objective (9) located in the objective working position, which deflects either the illumination light or the manipulation light such
that the illumination light and the manipulation light strike the sample (1) from different directions,
wherein, when the same objective (9) is used for the manipulation light and the illumination light, the sample (1) is exposed to the manipulation light and the illumination light separately in time and, when switching between exposure to the manipulation light and exposure to the illumination light, a distance difference along the optical axis of the objective (9) is compensated for by displacing the objective (9) along the optical axis thereof, which occurs **in that** the foci of the manipulation light and the illumination light do not have the same distance to the objective (9), and
a. the illumination light sheet (5) is a quasi-light sheet consisting of a continuously reciprocated illumination light beam, or that
b. the illumination light sheet (5) is a quasi-light sheet consisting of an illumination light beam continuously reciprocated with a beam deflection device (8) of the optical arrangement adjustable with respect to the deflection angle, or that
c. a cylinder optics of the optical arrangement is present, which generates the illumination light sheet (5).

2. The method according to claim 1, **characterized in that**
a. the sample (1) is illuminated in time sequence first with the manipulation light and then with the illumination light, or that
b. the sample (1) is illuminated in time sequence first with the illumination light and then with the manipulation light, or that
c. the sample (1) is illuminated alternately with the illumination light sheet (5) and the manipulation light.

3. The method according to claim 1 or 2, **characterized in that** the illumination light, after it has passed through the objective (9), is deflected by the deflection device (7) in such a way that it propagates at an angle other than zero degrees, in particular at an angle greater than 10 degrees, very particularly at a right angle, with respect to the optical axis of the objective (9), while the manipulation light, after passing through the objective (9), strikes the sample (1) without deflection.

4. The method according to any one of claims 1 to 3, **characterized in that** the illumination light or manipulation light is directed onto the deflection device (7) by means of a beam deflection device (8) of the optical arrangement which is adjustable with respect to the deflection angle.

5. The method according to one of the claims 1 to 4, **characterized in that** the deflection device has several different and/or differently arranged and/or distinctly aligned deflection means, in particular deflection mirrors, for deflecting the illumination light focused by the objective located in the objective working position or the manipulation light focused by the objective located in the objective working position.

6. The method according to any one of claims 1 to 5, **characterized in that**
a. the sample (1), in particular one and the same sample area to be manipulated, is exposed to manipulation light from several, different directions, and/or **in that**
b. a sample region to be manipulated is isocentrically and/or stereotactically exposed to the manipulation light, and/or **in that**
c. the manipulation light is moved as a manipulation light beam, in particular with a beam deflection device (8) of the optical arrangement and via a deflection device (7), connected downstream of the objective (9), of the optical arrangement on a cone lateral surface, and/or **in that**
d. a power changing device of the optical arrangement changes the power of the manipulation light during a beam deflection.

7. The method according to any one of claims 1 to 6, **characterized in that**
a. detection light emanating from the sample (1) passes through the objective (9) and/or is collimated with the objective (9) focusing the illumination light, or that
b. detection light originating from the sample (1) passes through a detection objective (6) of the optical arrangement and/or is collimated with a detection objective (6) of the optical arrangement which is different from the objective (9) focusing the illumination light and/or the manipulation light.

8. The method according to claim 7, **characterized in that** the optical axis of the objective (9) focusing the illumination light and/or the manipulation light and the optical axis of the detection objective (6) are aligned parallel and/or collinear to each other.

9. The method according to any one of claims 1 to 8, **characterized in that**
a. the objective (9), which focuses the illumination light and/or the manipulation light, and the deflection device (7) are arranged to be movable relative to one another and/or **in that**
b. the deflection device (7) is movably attached to the objective (9) which focuses the illumination light and/or the manipulation light and/or that
c. the deflection device (7) is movably attached to the detection objective (6) and/or that
d. the deflection device (7) is arranged rotatably about the detection objective (6) and/or the optical axis of the detection objective (6).

10. The method according to any one of claims 1 to 9, **characterized in that**
a. with the manipulation light and/or with the illumination light a two-photon excitation is effected and/or that
b. a pulse laser of the optical arrangement, in particular a picosecond or femtosecond laser, is present for generating the illumination light and/or the manipulation light.

11. The method according to any one of claims 1 to 10, **characterized in that** the optical arrangement is produced by converting a scanning microscope, in particular a confocal scanning microscope, and/or **in that** the optical arrangement includes a scanning microscope, in particular a confocal scanning microscope.

## Revendications

1. Procédé dans lequel un ensemble optique est utilisé pour manipuler un échantillon (1) à l'aide d'une lumière de manipulation et reproduire l'échantillon (1) à l'aide de la technologie SPIM sous un éclairage avec une lumière d'éclairage, en particulier une lumière d'excitation destinée à effectuer une excitation par fluorescence, sous la forme d'une nappe de lumière d'éclairage (5), **caractérisé en ce que** la lumière de manipulation et la lumière d'éclairage sont focalisées
a. par le même objectif (9) de l'ensemble optique qui est placé dans une position de travail d'objectif, ou
b. par différentes objectifs de l'ensemble optique qui sont amenées successivement dans une position de travail d'objectifs,
et en que, en aval de l'objectif (9) placé dans la position de travail d'objectif, est monté au moins un module de déviation (7) de l'ensemble optique qui dévie soit la lumière d'éclairage soit la lumière de manipulation de sorte que la lumière d'éclairage et la lumière de manipulation soient incidentes à l'échantillon (1) depuis des directions différentes,
lors de l'utilisation du même objectif (9) pour la lumière de manipulation et la lumière d'éclairage l'échantillon (1) étant exposé à la lumière de manipulation et à la lumière d'éclairage à des instants différents et, lors de la commutation entre une exposition à la lumière de manipulation et une exposition à la lumière d'éclairage, un coulissement de l'objectif (9) le long de son axe optique permettant de compenser une différence de distance le long de l'axe optique qui est due au fait que les foyers de la lumière de manipulation et de la lumière d'éclairage ne sont pas à la même distance de l'objectif (9), et au fait que
a. la nappe de lumière d'éclairage (5) est une quasinappe de lumière qui comprend un faisceau de lumière d'éclairage effectuant en continu un mouvement alternatif, ou au fait que
b. la nappe de lumière d'éclairage (5) est une quasinappe de lumière qui comprend un faisceau de lumière d'éclairage qui est déplacé en continu suivant un mouvement alternatif à l'aide d'un module de déviation de faisceau (8) de l'ensemble optique qui est réglable en termes d'angle de déviation ou au fait que
c. une optique cylindrique de l'ensemble optique est présente qui génère la nappe de lumière d'éclairage (5) .

2. Procédé selon la revendication 1, **caractérisé en ce que**
a. l'échantillon (1) est d'abord éclairé avec la lumière de manipulation puis avec la lumière d'éclairage, temporellement l'une après l'autre, ou **en ce que**
b. l'échantillon (1) est d'abord éclairé avec la lumière d'éclairage puis avec la lumière de manipulation, temporellement l'une après l'autre, ou **en ce que**
c. l'échantillon (1) est éclairé alternativement avec la nappe de lumière d'éclairage (5) et la lumière de manipulation.

3. Procédé selon la revendication 1 ou 2, **caractérisé en ce que**, après avoir traversé l'objectif (9), la lumière d'éclairage est déviée à l'aide du module de déviation (7) de manière à se popager suivant un angle différent de zéro degré, notamment un angle supérieur à 10 degrés, notamment un angle droit, par rapport à l'axe optique de l'objectif (9) tandis que, après avoir traversé l'objectif (9), la lumière de manipulation est incidente sans être déviée à l'échantillon (1).

4. Procédé selon l'une des revendications 1 à 3, **caractérisé en ce que** la lumière d'éclairage ou de manipulation est dirigée vers le module de déviation (7) à l'aide d'un module de déviation de faisceau (8) de l'ensemble optique qui est réglable en termes d'angle de déviation.

5. Procédé selon l'une des revendications 1 à 4, **caractérisé en ce que** le module de déviation comporte une pluralité de moyens de déviation différents et/ou disposés différemment et/ou orientés différemment, notamment des miroirs de déviation, afin de dévier la lumière d'éclairage focalisée par l'objectif placé dans la position de travail d'objectif ou la lumière de manipulation focalisée par l'objectif placé dans la position de travail d'objectif.

6. Procédé selon l'une des revendications 1 à 5, **caractérisé en ce que**
a. l'échantillon (1), en particulier une seule et même zone d'échantillon à manipuler, est exposé à une lumière de manipulation provenant de plusieurs directions différentes, et/ou **en ce que**
b. une zone d'échantillon à manipuler est soumise de manière isocentrique et/ou stéréotaxique à la lumière de manipulation, et/ou **en ce que**
c. la lumière de manipulation est déplacée en tant que faisceau lumineux de manipulation, en particulier à l'aide d'un module de déviation de faisceau (8) de l'ensemble optique et par le biais d'un module de déviation (7) de l'ensemble optique qui est monté en aval de l'objectif (9), et/ou **en ce que**
d. un dispositif de modification de puissance de l'ensemble optique modifie la puissance de la lumière de manipulation pendant une déviation de faisceau.

7. Procédé selon l'une des revendications 1 à 6, **caractérisé en ce que**
a. la lumière de détection provenant de l'échantillon (1) s'étend à travers l'objectif (9) et/ou est collimatée avec l'objectif (9) qui focalise la lumière d'éclairage, ou **en ce que**
b. la lumière de détection provenant de l'échantillon (1) s'étend à travers un objectif de détection (6) de l'ensemble optique et/ou est collimatée avec un objectif de détection (6) de l'ensemble optique qui est différent de l'objectif (9) qui focalise la lumière d'éclairage et/ou la lumière de manipulation.

8. Procédé selon la revendication 7, **caractérisé en ce que** l'axe optique de l'objectif (9), qui focalise la lumière d'éclairage et/ou la lumière de manipulation, et l'axe optique de l'objectif de détection (6) sont orientés façon à être parallèles et/ou colinéaires l'un à l'autre.

9. Procédé selon l'une des revendications 1 à 8, **caractérisé en ce que**
a. l'objectif (9), qui focalise la lumière d'éclairage et/ou la lumière de manipulation, et le module de déviation (7) sont disposés de manière à être mobiles l'un par rapport à l'autre et/ou **en ce que**
b. le module de déviation (7) est fixé de manière mobile à l'objectif (9), qui focalise la lumière d'éclairage et/ou la lumière de manipulation, et/ou **en ce que**
c. le module de déviation (7) est fixé de manière mobile à l'objectif de détection (6) et/ou **en ce que**
d. le module de déviation (7) est disposé de manière à pouvoir tourner autour de l'objectif de détection (6) et/ou de l'axe optique de l'objectif de détection (6).

10. Procédé selon l'une des revendications 1 à 9, **caractérisé en ce que**
a. une excitation à deux photons est effectuée avec la lumière de manipulation et/ou la lumière d'éclairage et/ou **en ce que**
b. un laser pulsé de l'ensemble optique, notamment un laser picoseconde ou femtoseconde, est présent pour générer la lumière d'éclairage et/ou la lumière de manipulation.

11. Procédé selon l'une des revendications 1 à 10, **caractérisé en ce que** l'ensemble optique est réalisé par transformation d'un microscope à balayage, notamment un microscope confocal à balayage, et/ou **en ce que** l'ensemble optique contient un microscope à balayage, notamment un microscope confocal à balayage.
